# EUROPÄISCHE PATENTANMELDUNG

(11) **EP 0 788 069 A2**
(43) Veröffentlichungstag der Anmeldung: **06.08.1997**
(21) Anmeldenummer: 97810029.5
(22) Anmeldetag: 22.01.1997
(51) Int. Cl.: G06K 7/10

(54) **Mitführbarer Identifikationsträger**

(30) Priorität: 01.02.1996 CH 258/96
(71) Anmelder: Kaba Schliesssysteme AG, 8620 Wetzikon (CH)
(72) Erfinder: Graf, Ulrich, 8405 Winterthur (CH); Locher, Johann, 8620 Wetzikon (CH)
(74) Vertreter: Frei, Alexandra Sarah

(57) **Zusammenfassung**

Der von einer Person mitführbare berührungslose Identifikationsträger mit Zutrittsfunktionen für bestimmte Gebiete, insbesondere für Skisportanlagen, ist als separates, flaches Trägerelement ausgebildet und an einem persönlichen Armband PA mittragbar und auswechselbar befestigt. Das Trägerelement (1) enthält einen passiven integrierten elektronischen Datenträger MI mit Prozessor sowie eine von einem Dielektrikum (4) umgebene integrierte Antenne (2) und eine lösbare Befestigungsvorrichtung (3). Die Antenne weist teilweise offene Abstrahlflächen FAO auf, welche nicht durch elektrisch leitende Teile des persönlichen Armbands PA abgedeckt sind. Dies ergibt ein universell anwendbares Identifikations- und Zutrittsmedium mit sehr gutem Komfort und überzeugenden Praxiseigenschaften.

## Beschreibung

Die Erfindung betrifft einen von einer Person mitführbarer berührungslosen Identifikationsträger mit Zutrittsfunktionen für bestimmte Gebiete gemäss Oberbegriff von Patentanspruch 1. Mitführbare Identifikationsträger sind für verschiedene Anwendungen und in verschiedenen Formen bekannt, z.B. als Karten oder Schlüsselanhänger, welche von berechtigten Personen mitgetragen werden können.
Als Zutrittsberechtigungsmedien in Skisportgebieten wurde schon vorgeschlagen: eine Karte, welche als berührungsloser Skipass vom Skifahrer in einer Tasche seines Anzugs mitgetragen werden kann oder eine Skipass-Uhr, d.h. eine spezielle Armbanduhr mit eingebautem Datenträger, welche als Zutritts-medium für ein Skigebiet Gültigkeit hat.

Die bisher bekannten Ausführungsformen weisen jedoch noch grosse Nachteile im praktischen Gebrauch auf und sind zudem oft eng begrenzt in ihrer Anwendung. Ein gravierender Nachteil der berührungslosen Skikarten liegt darin, dass solche Karten bei einem Kleidungswechsel in der Tasche leicht vergessen werden können und dass der Zutrittspass dann nicht vorhanden ist, wenn er benötigt wird. Bei der Skipass-Uhr stellt die Integration des Identifikationsträgers in eine spezielle Uhr eine aufwendige, zusätzliche Kosten verursachende Methode dar, welche zudem noch erhebliche Einschränkungen mit sich bringt. Ein grosser Teil der potentiellen Benützer eines bestimmten Skigebiets, für welches diese Skipass-Uhr gültig ist, lässt sich nicht gerne dazu zwingen, mit dem Skipass auch eine Uhr mitzukaufen. Die Skipass-Uhr ist denn auch nur für ein bestimmtes Gebiet und während einer bestimmten Zeit in ihrer Zulassungsfunktion einsetzbar und wird nachher nicht mehr gebraucht. Zudem wollen viele Benutzer ihre persönliche Armbanduhr nicht ablegen und durch eine obligatorische Skipass-Uhr ersetzen. Alle bekannten Vorschläge weisen noch erhebliche Nachteile auf, indem sie die Benutzer in unerwünschtem Masse einschränken, indem der Tragkomfort beeinträchtigt wird und die Handhabung der bekannten Identifikationsträger oft unpraktisch und bezüglich Funktionsreichweite ungenügend ist. Vor allem besteht auch die Gefahr des Vergessens des Zutrittspasses, wenn er gebraucht würde. Überdies gibt es einen erheblichen Anteil von Skifahrern, welche bewusst keine Uhr tragen wollen oder zumindest nicht in Sport, Ferien und Freizeit.

Es ist daher Aufgabe der Erfindung, diese bisherigen grossen Nachteile und Einschränkungen zu überwinden und eine universell einsetzbare neue Art von mitführbarem Identifikationsträger zu schaffen, welcher vor allem sicherstellt, dass der Zutrittspass nicht vergessen wird, wenn er in einem bestimmten Anwendungsbereich benötigt würde. Er soll möglichst einfach mitführbar sein und bezüglich Tragkomfort und Handhabung wenig Umstände bereiten. Insbesondere soll die Zutrittsfunktion auch mit beliebiger Sportbekleidung und Sportausrüstung einfach und sicher ausführbar sein, und der Identifikationsträger sollte auch ästhetischen Ansprüchen genügen können.

Diese Aufgabe wird erfindungsgemäss gelöst durch einen Identifikationsträger in Form eines zusätzlichen Trägerelements nach Patentanspruch 1. Durch die Fixierung an einem persönlichen Armband PA und die Auswechselbarkeit des Trägerelements wird sichergestellt, dass der Identifikationsträger nicht vergessen wird, sondern von der Person mitgeführt wird, wenn er benötigt wird. Das persönliche Armband ist in den meisten Fällen eine Armbanduhr,es kann aber auch z.B. ein Schmuckarmband sein. Auf jeden Fall wird so sichergestellt, wenn der Träger sein persönliches Armband auswechseln will, z.B. eine Sportuhr durch eine Schmuckuhr oder ein Armband ohne Uhr für einen abendlichen Ausgang, dass dann das nicht übersehbare Trägerelement mit dem Identifikationsträger auch auf das neue Armband übertragen wird. Dies ganz im Gegensatz zu den bekannten Identifikationskarten, welche oft in irgendeiner Tasche vergessen werden. Mit der lösbaren Befestigungsvorrichtung kann das flexible Trägerelement an einer beliebigen Position am persönlichen Armband befestigt werden, was ermöglicht, dieses so anzubringen, wie es dem persönlichen Tragkomfort einerseits sowie der Handhabung zur Zulassungsbetätigung andererseits optimal entspricht - da sich der am Handgelenk positionierte Datenträger sehr einfach in Ablese-Reichweite einer Leseantenne bringen lässt, ganz im Gegensatz zur bekannten Karte in irgendeiner Tasche. Die grossflächige und von einem Dielektrikum umgebene Antenne ermöglicht grosse Lese-Reichweiten, so dass die Betätigung an Zutrittsstationen wesentlich erleichtert und auch störungssicherer gemacht wird. Die Überdekkung der Antenne mit einem Dielektrikum ergibt eine Immunisierung der Umgebungseinflüsse - im speziellen des Körpers, auf welchem das Armband getragen wird, und allfälliger Metallteile des Armbands. Damit wird die sichere Funktion des Identifikationsträgers gewährleistet, auch bei veränderten Umgebungsbedingungen (z.B. unterschiedliche persönliche Armbänder und verschiedene Positionen des Trägerelements in bezug auf das Armband). Das Trägerelement kann sowohl auf dem Armband als auch unter dem Armband oder seitlich neben dem Armband fixiert und getragen werden.

Die abhängigen Ansprüche betreffen vorteilhafte Weiterbildungen und Varianten der Erfindung mit besonders geeigneten Formen, Antennen, Befestigungsvorrichtungen und zusätzlichen Funktionen.

Der Begriff des persönlichen Armbands PA bedeutet ein Armband in relativ beliebiger Form, mit Armbanduhr oder ohne Uhr, welches ganz nach Wunsch und persönlichem Geschmack des Träger ausgewechselt werden kann. Wichtig ist dabei, dass immer ein persönliches Armband getragen wird und dass daran das erfindungsgemässe Trägerelement mit Datenträger MI und Antenne (als Identifikationsträger) befestigt ist. Dies ermöglicht einen beliebigen Wechsel des persönlichen Armbands PA nach freier Wahl des Trägers, ohne dass dabei übersehen und vergessen wird, das Trägerelement auf das neue persönliche Armband zu übertragen. Damit wird auch deutlich, dass das neue Trägerelement mit Datenträger universeller einsetzbar ist als die bisher bekannten Lösungen.

Im folgenden wird die Erfindung anhand von Ausführungsbeispielen und Figuren weiter erläutert. Es zeigen:
- Fig.1a - c: einen erfindungsgemässen Identifikationsträger mit separatem Trägerelement mit Antenne und Befestigungsvorrichtung an einem persönlichen Armband PA in drei Ansichten
- Fig. 2: ein Beispiel eines formschlüssigen Verschlusses
- Fig. 3, 4: Beispiele von Befestigungsvorrichtungen mit Klettverschluss
- Fig. 5 a, b: ein Trägerelement mit Befestigungsvorrichtung als Einlage in einer Armbandschnalle
- Fig. 6: ein klammerförmiges Trägerelement mit Befestigungsvorrichtung
- Fig. 7: eine Befestigungsvorrichtung mit biegsamen Eckklammern
- Fig. 8a, b: eine zweiteilige Ausführung von Trägerelement und Befestigungsvorrichtung
- Fig. 9, 10: Beispiele von Identifikationsträgern mit Ferrit-Antennen
- Fig. 11a, b: verschiedene mögliche Positionierungen des Identifikationsträgers bezüglich persönlichem Armband PA und bezüglich Arm
- Fig. 12: eine transparente Ausführung des Identifikationsträgers auf dem Armband positioniert
- Fig. 13, 14: Beispiele von Identifikationsträgern an Armbanduhren
- Fig. 15: einen Identifikationsträger unter einem Metallglieder-Armband mit offenen Antennen-Abstrahlflächen

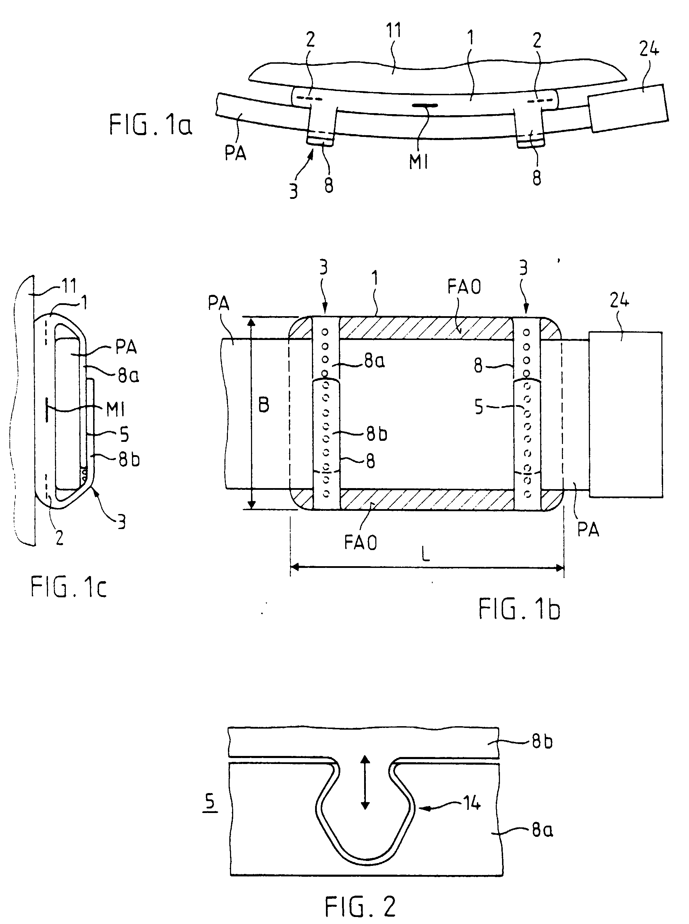

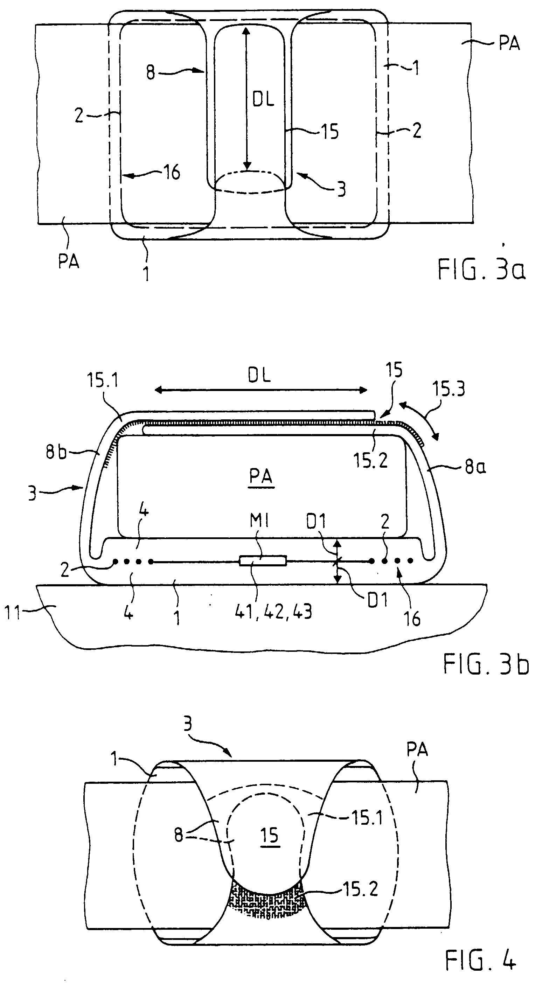

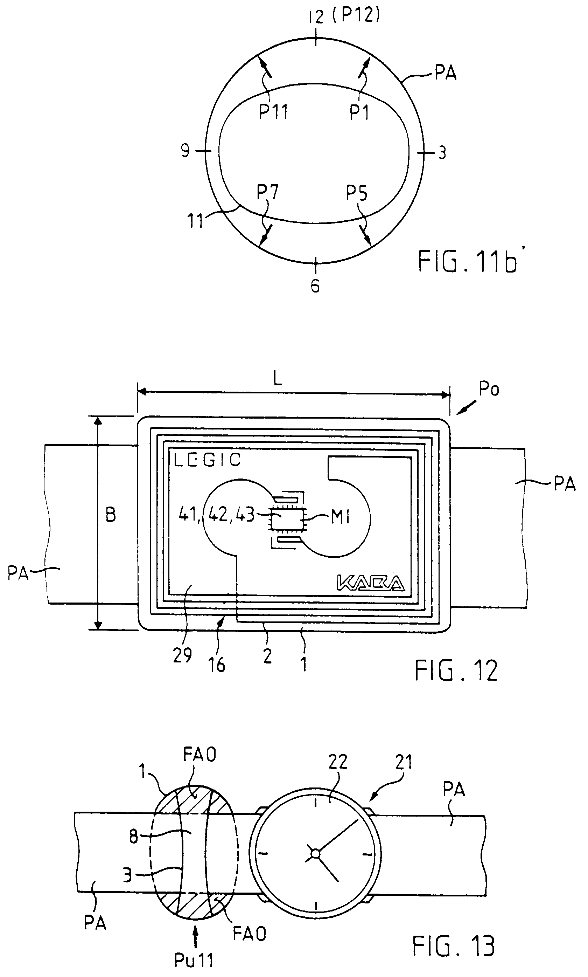

Figur 1 zeigt ein Beispiel eines erfindungsgemässen Identifikationsträgers in drei Ansichten 1a, 1b, 1c. Der Identifikationsträger ist an einem persönlichen Armband PA, welches am Arm 11 getragen wird, in einer geeigneten Position auswechselbar befestigt. Der Identifikationsträger besteht aus einem separaten, flachen Trägerelement 1 und einer lösbaren Befestigungsvorrichtung 3, welche ein Auswechseln des persönlichen Armbands PA ermöglicht. Das Trägerelement 1 enthält einen passiven integrierten elektronischen Datenträger MI mit Prozessor, elektrischer Schaltung und Datenspeicher sowie eine Antenne 2, welche von einem Dielektrikum 4, hier beidseitig von einer dielektrischen Überdeckungsschicht, umgeben ist (wie dies in Figur 3b weiter erläutert wird). Die Antenne 2 weist mindestens teilweise offene Antennen-Abstrahlflächen FAO auf, welche nicht von elektrisch leitenden Teilen bzw. von elektromagnetisch undurchlässigem Material des persönlichen Armbands abgedeckt sind. Weitere Illustrationen dazu finden sich in den Beispielen der Figuren 13 bis 15. Zwecks optimaler Anpassung an die Rundung des Arms 11 und des Armbands ist der Datenträger hier leicht gebogen ausgeführt und mit Vorteil aus einem flexiblen Material aufgebaut. Der Biegeradius kann einige Zentimeter betragen, z.B. 4 bis 8 cm. Das Trägerelement ist hier in einer günstigen Position neben dem Armbandverschluss 24 befestigt. Die Befestigungsvorrichtung 3 ist einstückig mit dem Trägerelement 1 verbunden, und sie besteht hier aus zwei Bändern 8 mit je gegenüberliegenden, miteinander verbindbaren Enden 8a, 8b. Das Trägerelement 1 ist hier unter dem Armband PA liegend, d.h. zwischen Arm 11 und Armband angebracht. Die Enden 8a, 8b umschliessen dabei das Armband PA, so dass sie dem Arm 11 gegenüberliegend über dem Armband PA zusammen geschlossen werden. Dazu dient ein einfach lösbarer und dennoch sicher haltender Verschluss 5, beispielsweise ausgeführt als formschlüssige Vorsprünge oder Zapfen auf dem Ende 8b, welche in Vertiefungen oder Löcher des Endes 8a eingreifen. Die Länge dieses Verschlusses ist dabei so verstellbar, dass er unterschiedlichen Querschnittsumfängen U des perönlichen Armbands PA optimal angepasst werden kann. Dazu sind ganze Reihen von formschlüssigen Verschlusselementen auf den Enden 8a und 8b angeordnet.

In Figur 2 wird ein Beispiel eines derartigen formschlüssigen Schnappverschlusses 14 illustriert. Hier sind Zapfen oder auch eine längs des Bandes verlaufende Rippe mit dieser Querschnittsform am Bandteil 8b angebracht. Die dazu passende formschlüssige Vertiefung als Loch oder auch als Längsrille befindet sich im Bandteil 8a. Kuststoffe eignen sich gut als Materialien für Befestigungen 3 und auch für Trägerelemente 1.

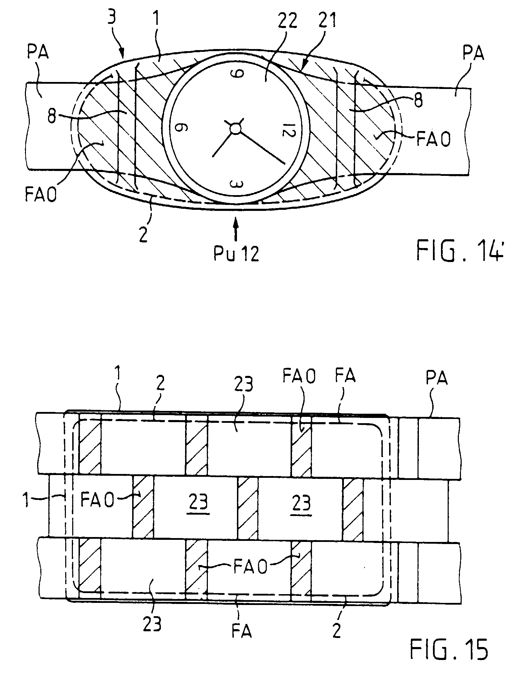

Die Figuren 3 und 4 illustrieren Beispiele von Befestigungsvorrichtungen mit Klettverschlüssen 15. Diese Beispiele weisen ein zentrales Band 8 mit den beiden Bandenden 8a und 8b auf, welches etwas breiter ausgebildet ist als die Versionen mit zwei Bändern 8 (Fig.1 und 14) und welches sich gegen das Trägerelement hin verbreitert, so dass sich das Trägerelement 1 bei geschlossenem Klettverschluss auch nicht verdrehen kann. Auf dem Bandende 8a ist der Schlaufenteil 15.2 des Klettverschlusses angebracht und das Gegenstück, der Hakenteil 15.1, befindet sich auf dem Bandende 8b. Die Länge dieser beiden Klettverschlussteile 15.1 und 15.2 ist dabei so gewählt, dass eine maximale Längenänderung DL des Verschlusses - in Anpassung an verschieden grosse persönliche Armbänder PA, d.h. entsprechend derem Querschnittsumfang U - erreicht werden kann.

Mit dem Klettverschluss ist ein besonders einfaches und praktisches Auswechseln des persönlichen Armbands PA möglich. Bei geeigneter Auslegung bezüglich Material und Lage der beiden Klettverschlussteile 15.1 und 15.2 ist ein sicherer Verschluss realisierbar, welcher sich unter normalen Behandlungsbedingungen nicht öffnet. Dieser Verschluss ist wenig auftragend, d.h. kann mit sehr geringer Dicke von z.B. nur 1 bis 1.5 mm ausgeführt werden und er kann vor allem auch aus transparentem Material gefertigt werden, welches das Erscheinungsbild des persönlichen Armbands nicht beeinflusst. Bei einem Klettverschluss, welcher aus einem Hakenteil und einem Schlaufenteil besteht, sollte die Hakenseite 15.1 nirgends nach aussen offen stehen, da diese sonst an Kleidern, vor allem an Strickwaren, einhängen könnte. Das heisst, es sollte vorzugsweise die Schlaufenseite 15.2 nach aussen gerichtet sein, soweit sie teilweise offen stehen kann 15.3 (je nach Längenanpassung DL an den Querschnittsumfang U des Armbands). Die Ränder der Hakenseite 15.1 zum Zudrücken des Verschluss sind hier rund und flach ausgebildet, so dass sie nicht aufgestülpt werden können.

In der Ansicht von Figur 3b, im Querschnitt zum persönlichen Armband PA, ist der Aufbau des Trägerelements dargestellt mit einem Datenträger MI, welcher einen Prozessor, eine elektrische Schaltung und einen Datenspeicher enthält, sowie mit einer flachen Antenne 2, welche beispielsweise als Luftschlaufe 16 auf einer gedrucketen Schaltung aufgebracht sein kann. Beidseitig der Antenne ist eine Überdeckung mit einem Dielektrikum 4 angebracht, welche eine Dicke D1 von z.B. vorzugsweise mindestens 0.5 mm aufweist und welche beispielsweise 0.5 bis 1 mm betragen kann. Damit können Umgebungseinflüsse des Arms 11 und auch von metallischen Teilen, z.B. des persönlichen Armbands PA, auf die Antennenfunktion wesentlich vermindert werden. Während die Befestigungsvorrichtung 3 im Beispiel von Figur 3 auf grosse Längenänderungen DL ausgerichtet ist zur Anpassung auch an breite Armbänder PA, zeigt das Beispiel von Figur 4 einen Klettverschluss, welcher sich besonders für kleinere und mittlere Armbänder eignet, bei denen kein besonders grosser Längeneinfluss DL auszugleichen ist. Hier können die beiden Bandteile 8a und 8b z.B. bogenförmig geschwungen ausgebildet sein und so zusammen mit dem Trägerelement 1 ein stark gerundetes Erscheinungsbild zeigen - falls dies gewünscht wird.

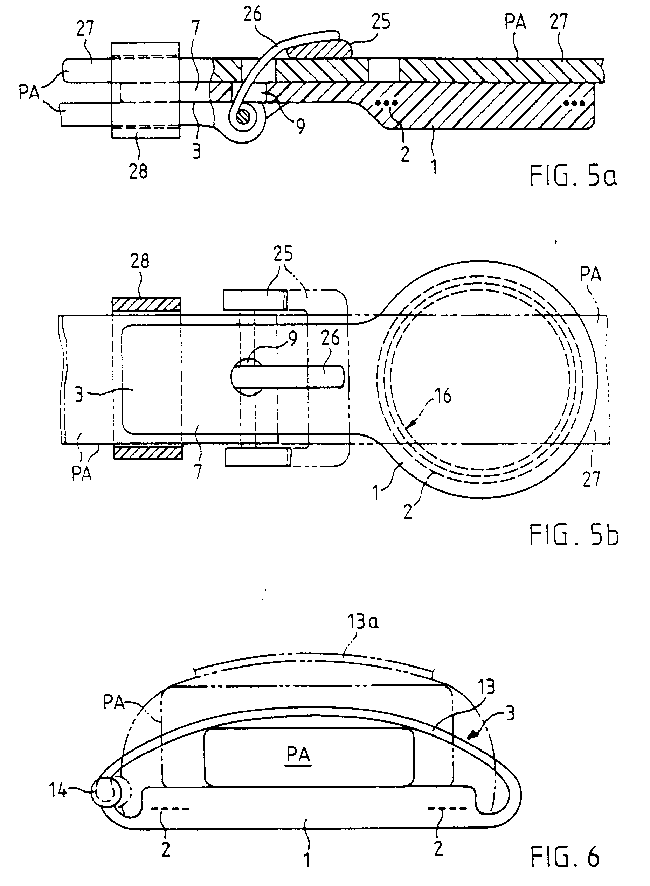

Figur 5 zeigt ein Beispiel, bei dem die Befestigungsvorrichtung 3 mit dem persönlichen Armband PA zusammenwirkend ausgebildet ist. Das Trägerelement 1 weist eine Verlängerung 7 mit einem Loch 9 auf und bildet so eine Einlage, welche an einer Riemenschnalle 25 mit Stift 26 des Armband befestigbar ist. Dazu wird die Einlage durch die Schnalle 25 hindurchgeführt und der Stift 26 im Loch 9 fixiert. Anschliessend wird der gelochte Bandteil 27 des Armbands PA über der Einlage durch die Schnalle 25 geführt und fixiert. Die Verlängerung 7 wird dabei durch ein Halterband 28 des Armbands gegen Verdrehung fixiert. Das Trägerelement 1 wird so in einer günstigen und komfortablen Tragposition am Armband befestigt, ohne dass dazu umgreifende Haltebänder erforderlich wären. Die Befestigungsvorrichtung 3 wird hier also durch die Verlängerung 7 mit Loch 9 einerseits und anderseits durch die Schnalle 25 mit Stift 26 des Armbands PA gebildet.

Diese Ausführung ist natürlich nur anwendbar für Armbänder mit Stift und Schnalle als Verschluss, welche jedoch weit verbreitet sind. Sie ist sehr einfach aufgebaut, sie ermöglicht freie Formgebungen und sie ergibt eine sehr sichere Fixierung. Die damit gegebene Positionierung des Trägerelements 1 unmittelbar neben der Schnalle ist relativ komfortabel und auch praktisch zur Ausübung der Identifikationsfunktion.

Figur 6 zeigt eine Ausführung, bei welcher das Trägerelement 1 zusammen mit der Befestigungsvorrichtung 3 eine das Armband PA umfassende Klammer bildet. Dazu ist die Befestigungsvorrichtung 3 als elastischer Bügel 13 ausgebildet, welcher sich unterschiedlichen Querschnittsformen und Grössen des Armbands anpassen kann. Zur Fixierung dient wieder ein Schnappverschluss 14. Eine alternative Lage des elastischen Bügels an einem grösseren Armband ist mit 13a bezeichnet.

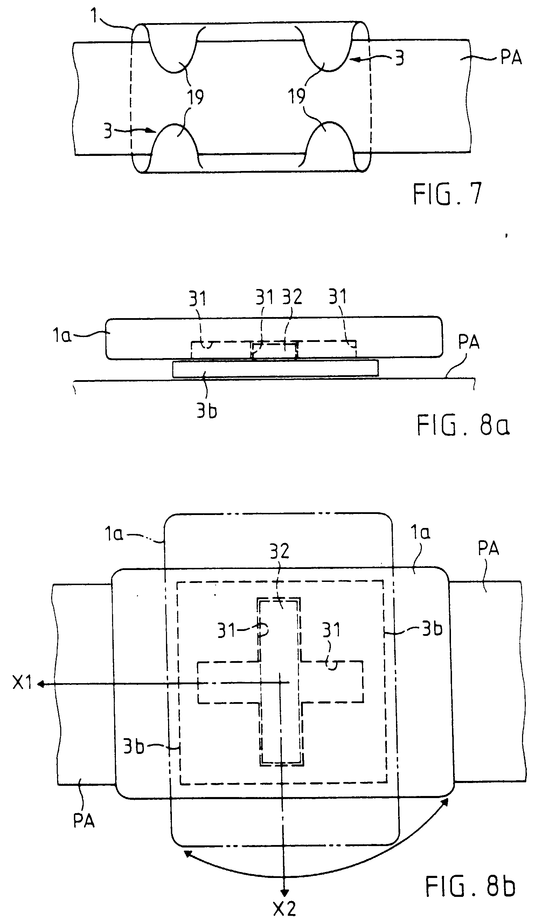

Figur 7 illustriert eine weitere Befestigungsart mittels vier elastischer Lappen 19, welche als Befestigungsvorrichtung an den Ecken des Trägerelements angebaut sind. Das Trägerelement 1 bildet so zusammen mit den Lappen 19 eine elastische Klammer, welche auf das persönliche Armband PA aufsteckbar ist. Dies stellt eine besonders einfache Ausführung dar für Armbänder mit ähnlichem Querschnitt.

Die Figuren 8a, b zeigen eine Weiterbildung der Erfindung, bei der das Trägerelement 1 und die Befestigungsvorrichtung 3 nicht mehr einstückig, sondern als zwei separierbare und fest zusammenfügbare Teile 1a, 3b ausgebildet sind. Diese zweiteilige Ausführung ermöglicht es, die relative Lage von Trägerelement 1a und Befestigungsvorrichtung 3b zueinander zu verändern und so rechteckförmige Trägerelemente wahlweise quer oder längs zum Armband, d.h. in Richtung X1 oder X2 zu fixieren - dies in Anpassung an unterschiedlich breite Armbänder PA. Zur Befestigung des Trägerelements 1a auf der Befestigungsvorrichtung 3b dient hier eine Rippe 32 im einen Teil und eine zugeordnete formschlüssige kreuzförmige Vertiefung 31 im andern Teil.
Es sind auch andere passende formschlüssige Ausformungen im Trägerelement und in der Befestigungsvorrichtung als umsteckbare Schnappverschlüsse oder Klettverschlüsse zur Fixierung verwendbar.

Für diese Ausführung zum Längs- und Quertragen eignen sich besonders Trägerelemente, deren Länge L vorzugsweise 20 bis 40%, maximal 50% grösser ist als ihre Breite B.

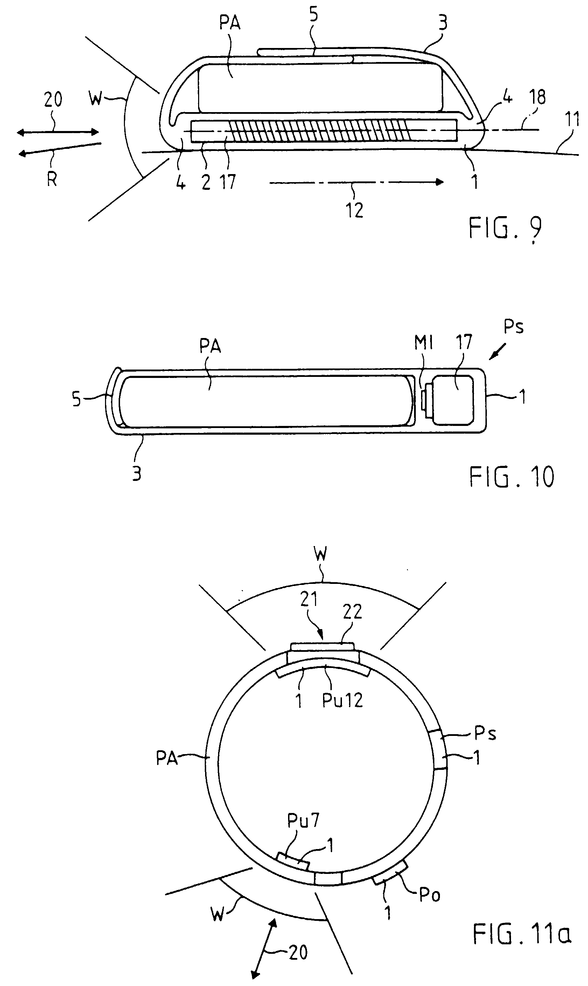

Figur 9 zeigt eine weitere Ausführungsvariante der Erfindung mit Ferrit-Antennen anstelle der bisher beschriebenen Schlaufenantennen. Ein flacher Ferrit-Stab 17 von z.B. 2 bis 3mm Dicke mit elektrischer Wicklung ist hier mit seiner Achse 18 quer zum persönlichen Armband PA angeordnet und ebenfalls von dielektrischem Material umgeben - vor allem im Abstrahlbereich W der Antenne. Der relativ grosse Raumwinkel W, im welchem eine codierte Kommunikation 20 mittels HF-Signalen mit einer zugeordneten Lesestation stattfinden kann, beträgt z.B. rund 90°. Die Kommunikationsreichweite R kann dabei mehrere Dezimeter betragen, z.B. 30 bis 60 cm. Diese Werte von W und R werden auch mit den grossflächigen flachen Schlaufenantennen erreicht. Die Kommunikation in Achsrichtung 18 verläuft hier parallel zur Achse 12 des Unterarms 11. Zur Ausübung der Identifikationsfunktion wird der Arm einfach in Richtung auf eine Lesestation hin ausgestreckt. Bei den flachen Antennenschlaufen 16 (bei Pu7 und Pu12 in Figur 11a) wird der Unterarm dagegen tangential zur Lesestation gehalten.

Im Beispiel von Figur 10 ist eine Ferrit-Antenne 17 seitlich neben dem persönlichen Armband PA befestigt. Die das Armband umfassende Befestigungsvorrichtung 3 mit Verschluss 5 und das Trägerelement 1 zusammen ergeben ebenfalls eine sehr flache und kompakte Form. Diese seitliche Tragposition ist mit Ps bezeichnet.

Die Figuren 11a, b illustrieren die Vielfältigkeit der möglichen Positionen, in denen das Trägerelement 1 ganz nach Wunsch des Trägers am persönlichen Armband PA befestigt sein kann. Figur 11a zeigt beispielsweise verschiedene Positionen bezüglich des Armbands PA:
Pu = Position unter dem Armband
Po = Position oben auf dem Armband
Ps = Position seitlich neben dem Armband

Beispielshaft ist hier auch der Raumwinkel W für die codierte HF-Kommunikation 20 mit einer Lesestation eingezeichnet.

Figur 11b illustriert die Lage in bezug auf den Arm 11. Dies wird hier angegeben durch Uhrzeigerstellungen, wobei P12 (am Ort 12 Uhr) die obere Seite des Handgelenks bezeichnet. Günstige Befestigungspositionen liegen z.B. im flachen Bereich oben von 11 bis 1 Uhr (P11 bis P1) und unten z.B. von 5 bis 7 Uhr (P5 bis P7).
Die Figur 11a zeigt beispielsweise eine Position Pu12, wobei hier das Trägerelement 1 unter einer Uhr 22 einer Armbanduhr 21 befestigt ist. (Vergleiche dazu Figur 14.)

Figur 12 zeigt ein Beispiel in einer transparenten Ausführung 29 des Trägerelements 1, welches auf dem persönlichen Armband PA getragen und fixiert ist (Position Po). Hier ist der innere elektrische Aufbau sichtbar mit Datenträger MI (Chip), Verbindungsleitungen und Antennenschlaufen 16. Dies ergibt ein ansprechendes, modernes "Elektronic Design", bei welchem die Identifikationsfunktion quasi sichtbar gemacht wird.

Die Figuren 13 und 14 zeigen Beispiele mit Armbanduhren 21 als persönliches Armband PA, bei denen das Trägerelement 1 in der Umgebung der Uhr 22 angebracht ist. Das Erscheinungsbild kann den gewünschten Uhren entsprechend ausgestaltet sein und hier beispielsweise für runde Uhren eine entsprechend gerundete Aussenform zeigen. In Fig. 13 ist das Trägerelement 1 z.B. in einer Position Pu11 unter dem Armband und neben der Uhr 22 angeordnet und mit einem Band 8 als Befestigungsvorrichtung fixiert. Es könnte aber auch eine Position Po11, d.h. auf dem Armband liegend, gewählt werden.

In Figur 14 ist das Trägerelement unter der Uhr 22 und seitlich darüber hinausreichend in einer Position Pu12 mit zwei Bändern 8 beidseitig der Uhr als Befestigungsvorrichtung fixiert. Dadurch ergeben sich relativ grosse, nicht von der Uhr 22 abgedeckte offene Antennen-Abstrahlflächen FAO.
Falls im Beispiel von Figur 13 ein kompaktes Metallarmband eingesetzt ist, so ergeben sich daneben ebenfalls noch genügend grosse offene Antennenflächen FAO, wie dies schraffiert eingezeichnet ist.

Gemäss Beispiel von Figur 15 genügt sogar ein kleiner Anteil von offenen Antennenflächen FAO, welche nicht durch elektromagnetisch undurchlässiges Material, bzw. durch elektrisch leitende Teile, abgedeckt sind. Es genügt z.B. ein Anteil von 10 -20% der ganzen Antennenfläche FA zur Ausübung der Kommunikation mit einer Lesestation. Das Beispiel zeigt ein Armband mit Metallgliedern 23, zwischen denen die Bereiche FAO offen bleiben. Die offenen Antennen-Abstrahlflächen betragen vorzugsweise mindestens 0.5 cm².

Mit dem erfindungsgemässen Konzept mit dem separaten Trägerelement 1 können die Anwendungsbereiche und -funktionen wesentlich erweitert werden. Der Datenträger MI kann mit einem beschreibbaren Speicher 41 ausgerüstet sein und zusätzliche Funktionen 42 wie Wertkartenfunktionen sowie auch zusätzliche persönliche Codierungsfunktionen 43 enthalten, wie PIN-Codes oder biometrische Datencodes - wie dies in den Figuren 3b und 12 bezeichnet ist. Die codierte Kommunikation 20 erfolgt dann mit entsprechend ausgerüsteten Schreib- und Lesestationen, wie dies an sich bekannt ist.

### Bezeichnungsliste P1065

- 1: Trägerelement
- 2: Antenne
- 3: Befestigungsvorrichtung
- 4: Dielektrikum, Abdeckung
- 5: Verschluss von 3
- 1a, 3b: zwei separierbare Teile
- 7: Verlängerung von 1
- 8: Bänder von 3
- 8a, b: gegenüberliegende Enden der Bänder 8
- 9: Loch in 7
- 11: Arm, Handgelenk
- 12: Armachse
- 13: elastischer Bügel
- 13a: andere Lage von 13
- 14: Schnappverschluss, formschlüssig
- 15: Klettverschluss
- 15.1: Hakenteil
- 15.2: Schlaufenteil
- 15.3: offenliegender Teil
- 16: Antennenschlaufe
- 17: Ferrit
- 18: Ferritachse
- 19: biegsame Klammer, Ecklappen
- 20: Kommunikation
- 21: Armbanduhr
- 22: Uhr
- 23: Metallgliederarmband
- 24: Armbandverschluss
- 25: Schnallenverschluss
- 26: Stift zu 25
- 27: gelochtes Bandteil PA
- 28: Halterbändchen
- 29: transparente Ausführung
- 31: Vertiefung
- 32: Rippe
- 41: beschreibbarer Speicher
- 42: zusätzliche Funktionen, Wertkarten
- 43: zusätzliche persönliche Codierungsfunktionen

- D1: Dicke von 4
- DL: Längenänderung von 3
- FA: ganze Antennenfläche
- FAO: offene Antennen-Abstrahlflächen
- PA: persönliches Armband
- U: Querschnittsumfang von PA
- W: Kommunikationsraumwinkel
- R: Kommunikationsreichweite
- MI: Datenträger, Identifikationsmedium

- Positionen
- Po: oben bezüglich PA
- Pu: unten
- Pu7: unten, Lage 7 Uhr
- Ps: seitlich neben

- X1, X2: Richtungen für 1a, 3b

## Patentansprüche

1. Von einer Person mitführbarer berührungsloser Identifikationsträger mit Zutrittsfunktionen für bestimmte Gebiete, insbesondere für Skisportanlagen, dadurch gekennzeichnet,
dass der Identifikationsträger als separates, flaches Trägerelement (1) ausgebildet ist,
welches an einem persönlichen Armband PA mittragbar und auswechselbar befestigt ist,
und wobei das Trägerelement (1) einen passiven integrierten elektronischen Datenträger MI mit Prozessor, elektrischer Schaltung und Speicher sowie eine integrierte Antenne (2)
und eine lösbare Befestigungsvorrichtung (3) aufweist, welche ein Auswechseln des persönlichen Armbands PA zulässt
und wobei die Antenne von einem Dielektrikum (4) umgeben ist und mindestens teilweise offene Abstrahlflächen FAO aufweist, welche nicht durch elektrisch leitende Teile des persönlichen Armbands PA abgedeckt sind.

2. Identifikationsträger nach Anspruch 1, dadurch gekennzeichnet, dass das Trägerelement (1) flexibel und leicht gebogen ist.

3. Identifikationsträger nach Anspruch 1, gekennzeichnet durch eine grossflächige, flache Antennenschlaufe (16), welche beidseitig eine dielektrische Abdeckung (4) von je mindestens 0.5 mm Stärke D1, z.B. von 0.5 bis 1 mm aufweist .

4. Identifikationsträger nach Anspruch 1, dadurch gekennzeichnet, dass die offenen Antennen-Abstrahlflächen FAO mindestens 0.5 cm² betragen.

5. Identifikationsträger nach Anspruch 1, dadurch gekennzeichnet, dass das persönliche Armband PA eine Armbanduhr (21) ist und das Trägerelement (1) unter der Armbanduhr so befestigbar ist, dass offene Antennen-Abstrahlflächen FAO vorhanden sind, welche nicht von der Fläche der Uhr (22) überdeckt werden.

6. Identifkationsträger nach Anspruch 1, dadurch gekennzeichnet, dass das Trägerelement (1) in verschiedenen Tragpositionen: auf (Po), unter (Pu) oder seitlich (Ps) neben dem persönlichen Armband PA fixierbar ist.

7. Identifikationsträger nach Anspruch 1, dadurch gekennzeichnet, dass die Befestigungsvorrichtung (3) mit einer Hand betätigbar ist.

8. Identifikationsträger nach Anspruch 1, dadurch gekennzeichnet, dass die Befestigungsvorrichtung (3) in ihrer Länge verstellbar (DL) und damit dem Querschnittsumfang U des persönlichen Armbands anpassbar ist.

9. Identifikationsträger nach Anspruch 1, dadurch gekennzeichnet, dass die Befestigungsvorrichtung (3) aus Kunststoff besteht und einen formschlüssigen Verschluss (14) aufweist.

10. Identifikationsträger nach Anspruch 1, dadurch gekennzeichnet, dass das Trägerelement mit der Befestigungsvorrichtung (3) eine flache, das persönliche Armband umfassende Klammer (13) mit einem Verschluss bildet.

11. Identifikationsträger nach Anspruch 1, dadurch gekennzeichnet, dass die Befestigungsvorrichtung Bänder (8) mit gegenüberliegenden, miteinander verbindbaren Enden (8a, 8b) aufweist.

12. Identifikationsträger nach Anspruch 1, dadurch gekennzeichnet, dass die Befestigungsvorrichtung (3) einen Schnappverschluss (14) aufweist.

13. Identifikationsträger nach Anspruch 1, dadurch gekennzeichnet, dass die Befestigungsvorrichtung (3) einen Klettverschluss (15) aufweist.

14. Identifikationsträger nach Anspruch 1, dadurch gekennzeichnet, dass das Trägerelement (1) und die Befestigungsvorrichtung (3) als zwei separierbare und fest zusammenfügbare Teile (1a, 3b) ausgebildet sind.

15. Identifikationsträger nach Anspruch 14, dadurch gekennzeichnet, dass das Trägerelement (1a) und die Befestigungsvorrichtung (3b) in zwei senkrecht zueinander stehenden Richtungen (X1, X2) zusammenfügbar sind und wobei die Länge L des Trägerelements das 1.2- bis 1.5-fache von dessen Breite B beträgt.

16. Identifikationsträger nach Anspruch 1, dadurch gekennzeichnet, dass die Antenne (2) als flacher Ferrit (17) mit einer elektrischen Wicklung ausgebildet ist, wobei die Ferritachse (18) parallel zur Achse (12) des Unterarms verläuft.

17. Identifikationsträger nach Anspruch 1, dadurch gekennzeichnet, dass das Trägerelement (1) und/oder die Befestigungsvorrichtung (3) transparent (29) ausgebildet sind.

18. Identifikationsträger nach Anspruch 1, dadurch gekennzeichnet, dass der Datenträger MI einen beschreibbaren Speicherteil (41) enthält und dass er zusätzliche Funktionen (42) aufweist wie Wertkartenfunktionen.

19. Identifikationsträger nach Anspruch 18, dadurch gekennzeichnet, dass der Datenträger MI eine zusätzliche persönliche Codierungsfunktion (43) enthält wie PIN Code oder biometrischer Datencode.
